# EUROPEAN PATENT APPLICATION

(11) **EP 2 292 719 A1**
(43) Date of publication of application: **09.03.2011**
(21) Application number: 09181000.2
(22) Date of filing: 30.12.2009
(51) Int. Cl.: C09K 11/77

(54) **Green phosphor and plasma display panel comprising same**

(30) Priority: 04.09.2009 US 240104 P; 24.12.2009 US 647264
(71) Applicant: Samsung SDI Co., Ltd., Gyeonggi-do (KR)
(72) Inventor: Lee, Young-Hun, Gyeonggi-do (KR); Choi, Ick-Kyu, Gyeonggi-do (KR); Kim, Young-Ki, Gyeonggi-do (KR); Song, Jay-Hyok, Gyeonggi-do (KR); Song, Yu-Mi, Gyeonggi-do (KR); Kim, Young Kwan, Gyeonggi-do (KR); Lee, Soon-Rewl, Gyeonggi-do (KR); Kim, Yoon-Chang, Gyeonggi-do (KR); Zang, Dong-Sik, Gyeonggi-do (KR)
(74) Representative: Killin, Stephen James

(57) **Abstract**

A green phosphor comprising strontium (Sr); aluminum (A1); europium (Eu); and at least one element M selected from the group consisting of phosphorous (P), arsenic (As), antimony (Sb), and bismuth (Bi) is provided, as well as a plasma display panel (PDP) including the same.

## Description

This present invention relates to a green phosphor and a plasma display panel (PDP) including the same. In particular, the present invention relates to a green phosphor comprising strontium (Sr), aluminium (Al), europium (Eu) and at least one element M selected from the group consisting of phosphorous (P), arsenic (As), antimony (Sb) and bismuth (Bi).

A phosphor is a material that receives energy such as light energy or electric energy from an external source and emits light in the visible range which can be seen by the human eye. A phosphor may be used for such electronic devices as a plasma display panel (PDP), a field emission display (FED) and a light emitting diode (LED), and it may dominate the light emission characteristics and color characteristics of the electronic devices.

A PDP is a display device that may display an image by exciting phosphor with vacuum ultraviolet (VUV) rays generated by gas discharge in discharge cells.

A phosphor layer of the PDP contains red, green and blue phosphors. As for the green phosphor, Zn₂SiO₄:Mn and YBO₃:Tb are generally used.

Zn₂SiO₄:Mn has excellent light emitting luminance and decay time characteristic. However, its weakness to ion impact not only shortens the life-span of the green phosphor but also increases discharge initiation voltage so that discharge may not occur in low grayscales. YBO₃:Tb is stronger to ion impact than Zn₂SiO₄:Mn and has a lower discharge initiation voltage. However, it has a limitation in the aspect of luminance and color characteristics.

The present invention provides a green phosphor that is free from phosphorescence and has improved luminance, color characteristics and temperature degradation, as well as a PDP including the green phosphor.

According to a first aspect of the present invention, there is provided a green phosphor comprising strontium (Sr), aluminium (Al), europium (Eu) and at least one element M selected from the group consisting of phosphorus (P), arsenic (As), antimony (Sb) and bismuth (Bi).

The green phosphor may be represented by the following Formula 1.

[Formula 1] Sr₍₁₋ₓ₎A1_{(1-y)}M_{y}O:Euₓ

In the above Formula 1, 0.01≤x≤0.3, and 0.01≤y≤0.2.

In an embodiment, y may be in the range of 0.05≤y≤0.1.

The green phosphor may have CIE color coordinates of x: 0.280-0.299 and y: 0.580-0.599.

The green phosphor may have a decay time of less than about 1ms. In an embodiment, the green phosphor has a decay time of about 0.5 to 1ms.

The at least one element M selected from the group consisting of phosphorus, arsenic, antimony and bismuth may be present in higher concentration at the surface of the phosphor. In an embodiment, the at least one element M is present as a dopant. In this last embodiment, the at least one element M may be impregnated into the surface of a mixture comprising the remaining components, so as to form the green pigment

The at least one element selected from the group consisting of phosphorous (P), arsenic (As), antimony (Sb), and bismuth (Bi) may be uniformly distributed throughout the green phosphor.

The at least one element selected from the group consisting of phosphorous (P), arsenic (As), antimony (Sb), and bismuth (Bi) may be partially distributed through the green phosphor.

The green phosphor may be applicable to a PDP.

According to a second aspect of the present invention, there is provided a PDP including the green phosphor according to the present invention in its first aspect.

According to a third aspect of the present invention, there is provided a method for preparing a green phosphor comprising: (a) mixing a strontium compound, an aluminium compound, a europium compound and at least one compound of an element M selected from the group consisting of phosphorus, arsenic, antimony and bismuth; and (b) heating the mixture so obtained to form a green phosphor.

The green phosphor may comprise a compound of the formula (I)

Sr₍₁₋ₓ₎AL_{(1-y)}M_{y}O:Euₓ (I)

wherein 0.01≤x≤0.3, and 0.01≤y≤0.2

The at least one compound of the element M may be selected from the group consisting of P₂O₅, As₂O₅, Sb₂O₅ and Bi₂O₃.

The strontium compound, the aluminium compound, the at least one compound of the element M selected from the group consisting of phosphorus (P), arsenic (As), antimony (Sb) and bismuth (Bi), and the europium compound, may be mixed in the presence of a flux.

The mixture may be heated by being baked at 1400°C for 2 hours and 30 minutes.

Further embodiments of the present invention in any of its various aspects are as described below or as defined in the sub-claims.

A more complete appreciation of the present invention, and many of the attendant advantages thereof, will be readily apparent as the same becomes better understood by reference to the following detailed description when considered in conjunction with the accompanying drawings, wherein:
FIGURE 1 is a partially exploded perspective view of a plasma display panel (PDP) according to one embodiment of the present invention.
FIGURE 2 is a graph showing decay time spectrum of the phosphor according to Example 1-1.
FIGURE 3 is a graph showing absorption spectra of the phosphors according to Example 1-1 and Comparative Example 2.

The green phosphor according to the present invention includes strontium (Sr); aluminum (Al); at least one element M selected from the group consisting of phosphorous (P), arsenic (As), antimony (Sb), and bismuth (Bi); and europium (Eu).

The at least one element M selected from the group consisting of phosphorous (P), arsenic (As), antimony (Sb), and bismuth (Bi) may be entirely and uniformly distributed throughout the green phosphor. Alternately, the at least one element M selected from the group consisting of phosphorous (P), arsenic (As), antimony (Sb), and bismuth (Bi) may be distributed in part of the green phosphor. The at least one element M may be present at higher concentration at the surface of the green phosphor. In an embodiment, the at least one element M is a dopant in the green phosphor. In this last embodiment, the at least one element M, or a compound containing the at least one element M, may be impregnated into the surface of a mixture comprising the other components, so as to form the green pigment.

The green phosphor may comprise a compound represented by the following Formula 1.

[Formula 1] Sr₍₁₋ₓ₎Al_{(1-y)}M_{y}O:Euₓ

In the above Formula 1, 0.01≤x≤0.3, and 0.01≤y≤0.2.

The at least one element M selected from the group consisting of phosphorus (P), arsenic (As), antimony (Sb) and bismuth (Bi) may exist in a form where a part of aluminum (Al) is substituted, and europium (Eu) serves as an activator.

The green phosphor has excellent luminous efficiency and short decay time. Herein, the decay time means the time taken for light quantity emitted from the phosphor to be reduced to a tenth of the initial light quantity right after the termination of excitement. In an embodiment, the green phosphor has a decay time of less than about 1ms, particularly about 0.5 ms to 1 ms. Therefore, it may be usefully used for a three dimensional (3D) stereoscopic image device.

Also, since the green phosphor has CIE color coordinates of x ranging from about 0.280 to about 0.299 and y ranging from about 0.580 to about 0.599, it has excellent green characteristics.

Also, since the green phosphor has some aluminum substituted with at least one element selected from the group consisting of phosphorus (P), arsenic (As), antimony (Sb) and bismuth (Bi), it is possible to remove phosphorescence generated during excitation. Thus, the green phosphor may be used usefully in a PDP. When a phosphor generating phosphorescence is applied to a PDP, afterglow remains even after an image is changed, degrading display characteristics. However, with the green phosphor suggested in the embodiment of the present invention, afterglow is removed, improving the display characteristics.

Also, since the green phosphor has some of aluminum substituted with at least one element selected from the group consisting of phosphorus (P), arsenic (As), antimony (Sb) and bismuth (Bi), degradation caused by heat is prevented. Therefore, it is possible to prevent luminance from being deteriorated remarkably at high temperature.

The green phosphor may be applied to all electronic devices including a phosphor displaying green color, such as a PDP, a field emission display and a light emitting diode.

Hereinafter, a PDP including the green phosphor will be described in detail by referring to drawings.

In the drawings, the thickness of layers, films, panels, regions, etc., are exaggerated for clarity. Like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

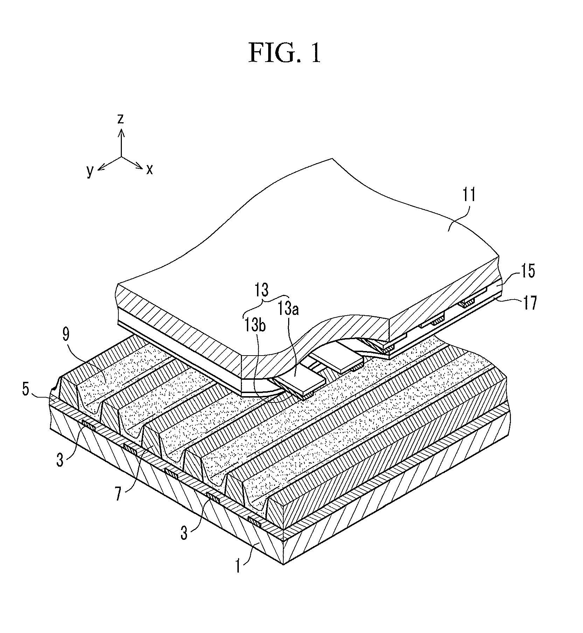

FIGURE 1 is a partially exploded perspective view of a PDP according to one embodiment.

Referring to FIGURE 1, the PDP includes a first substrate 1 and a second substrate 11 that are disposed substantially in parallel to each other with a predetermined distance therebetween.

On the surface of the first substrate 1, a plurality of address electrodes 3 are disposed in one direction (the Y direction in the drawing), and a first dielectric layer 5 is disposed covering the address electrodes 3. A plurality of barrier ribs 7 are formed on the first dielectric layer 5 between the address electrodes 3 at a predetermined height to form a plurality of discharge space.

The barrier ribs 7 may be formed in any shape, as long as their shape can partition the discharge space. In addition, the barrier ribs 7 can have diverse patterns. For example, the barrier ribs 7 may be formed as an open-type such as stripes or as a closed type such as a waffle, a matrix, or a delta shape. Also, the closed-type barrier ribs may be formed such that a horizontal cross-section of the discharge space is a polygon such as a quadrangle, a triangle, or a pentagon, or a circle or an oval.

Then, red (R), green (G), and blue (B) phosphor layers 9 are disposed in discharge cells 7R, 7G, and 7B formed between the barrier ribs 7. The green phosphor layer includes the above green phosphor.

Display electrodes 13, each including a pair of transparent electrodes 13a and bus electrodes 13b, are disposed in a direction crossing the address electrodes 3 (the X direction in the drawing) on one surface of a second substrate 11 facing the first substrate 1. Also, a dielectric layer 15 is disposed on the surface of the second substrate 11 while covering the display electrodes 13. The display electrode 13 includes a pair of transparent electrode 13a and bus electrode 13b.

Discharge cells are formed at positions where the address electrodes 3 are crossed by the display electrodes 13.

With the above-described structure, address discharge is performed by applying an address voltage (Va) to a space between the address electrodes 3 and any one discharge sustain electrode 13. When a sustain voltage (Vs) is applied to a space between a pair of discharge sustain electrodes 13, an exciting source generated from the sustain discharge excite a corresponding phosphor layer 9 to thereby emit visible light through the transparent second substrate 11. Representative example of the exciting source is vacuum ultraviolet rays (VUV).

### Example

Strontium oxide, alumina, a precursor of an M element (the M element was one among phosphorous (P), arsenic (As), antimony (Sb) and bismuth(Bi)), and europium oxide were mixed according to their chemical equivalent, and mixed with 0.5wt% of flux AlF₃, and baked at 1400°C in a reduction atmosphere for 2 hours 30 minutes to thereby produce a baked mixture. As for the precursor of the M element, P₂O₅ As₂O₅, Sb₂O₅ and Bi₂O₃ have been used, individually. Subsequently, the baked mixture was pulverized, rinsed, dried and sieved to thereby prepare Sr_{0.8}Al_{(1-y)}M_{y}O:Eu_{0.2} phosphor wherein M and y were as presented in the following Table 1.

**Table 1**

| | M | y |
|---|---|---|
| Example 1-1 | P | 0.05 |
| Example 1-2 | | 0.075 |
| Example 1-3 | | 0.1 |
| Example 2-1 | As | 0.05 |
| Example 2-2 | | 0.075 |
| Example 2-3 | | 0.1 |
| Example 3-1 | Sb | 0.05 |
| Example 3-2 | | 0.075 |
| Example 3-3 | | 0.1 |
| Example 4-1 | Bi | 0.05 |
| Example 4-2 | | 0.075 |
| Example 4-3 | | 0.1 |

### Comparative Example 1

Strontium oxide, alumina and europium oxide were mixed according to their chemical equivalent, mixed with 0.5wt% of flux AlF₃, and baked at 1400°C in a reduction atmosphere for 2 hours 30 minutes to thereby produce a baked mixture. Subsequently, the baked mixture was pulverized, rinsed, dried and sieved to thereby prepare Sr_{0.8}Al₂O:Eu_{0.2} phosphor.

### Comparative Example 2

Yttrium oxide, alumina and cerium oxide were mixed according to their chemical equivalent, mixed with 3.0wt% of flux BaF₃, and baked at 1600°C in a reduction atmosphere for 3 hours to thereby produce a baked mixture. Subsequently, the baked mixture was pulverized, rinsed, dried and sieved to thereby prepare Y₂.₉₇Al₅O₁₂:Ce_{0.03} phosphor.

### Evaluation - 1

Decay time spectrum of the phosphor prepared according to Example 1 -1 was measured.

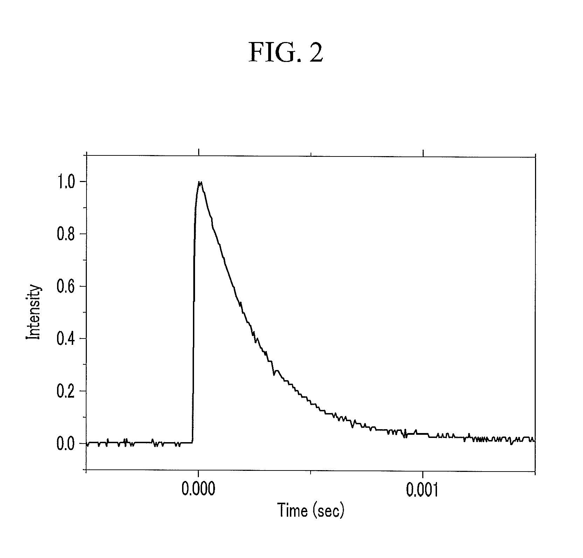

FIGURE 2 is a graph showing decay time spectrum of the phosphor according to Example 1-1.

As shown in FIGURE 2, the phosphor according to Example 1-1 has short decay time of about less than about 1ms (0.001s).

### Evaluation - 2

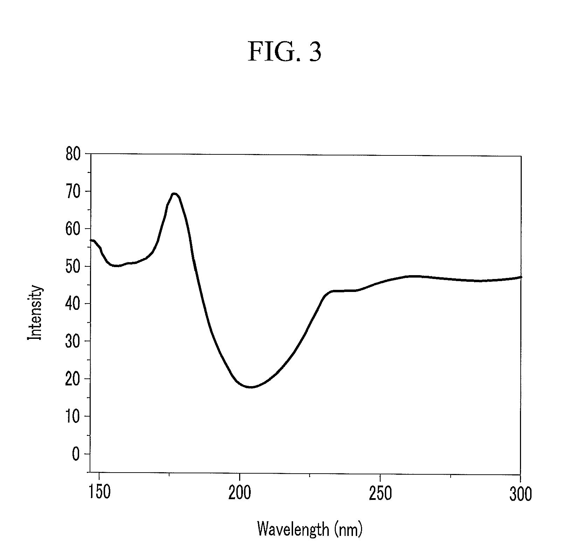

Absorption spectra of the phosphor prepared according to Example 1-1 was measured. FIGURE 3 is a graph showing absorption spectra of the phosphors according to Example 1-1.

Referring to FIGURE 3, the phosphor A prepared according to Example 1-1 shows high absorption spectrum at about 147nm and about 172nm regions. These are wavelength regions of light generated from excitation when xenon (Xe) gas is used as a discharge gas in a PDP, and it can be seen that using xenon as a discharge gas is appropriate for a PDP.

### Evaluation - 3

CIE color coordinates, luminance and phosphorescence of the phosphors prepared according to Example and Comparative Examples were measured and presented in the following Table 2. The luminances of the phosphors were relatively assessed by taking the luminance of the phosphor prepared according to Comparative Example 2 as 100%.

**Table 2**

| | CIE x | CIE y | Luminance (%) | phosphorescence |
|---|---|---|---|---|
| Example 1-1 | 0.293 | 0.582 | 108 | X |
| Example 1-2 | 0.292 | 0.582 | 110 | X |
| Example 1-3 | 0.294 | 0.582 | 108 | X |
| Example 2-1 | 0.287 | 0.590 | 98 | X |
| Example 2-2 | 0.286 | 0.589 | 96 | X |
| Example 2-3 | 0.286 | 0.589 | 80 | X |
| Example 3-1 | 0.288 | 0.591 | 89 | X |
| Example 3-2 | 0.289 | 0.591 | 85 | X |
| Example 3-3 | 0.288 | 0.591 | 80 | X |
| Example 4-1 | 0.292 | 0.581 | 100 | X |
| Example 4-2 | 0.292 | 0.580 | 90 | X |
| Example 4-3 | 0.291 | 0.581 | 85 | X |
| Comparative Example 1 | 0.284 | 0.590 | 75 | ○ |
| Comparative Example 2 | 0.421 | 0.556 | 100 | X |

Table 2 shows that the phosphor according to Example had similar color coordinates to that of the Comparative Example 1 and excellent luminance while not generating phosphorescence. Also, the phosphor of Example had excellent color characteristics, compared with the phosphor of Comparative Example 2.

### Evaluation - 4

The phosphors prepared according to Example 1-1 and Comparative Example 1 were thermally treated at about 600°C and their CIE color coordinates, luminance and phosphorescence were measured and presented in the following Table 3. The luminances of the phosphors were relatively assessed by taking the luminance of the phosphor prepared according to Comparative Example 2 as 100%.

**[Table 3]**

| | | CIE x | CIE y | Luminance (%) | phosphorescence |
|---|---|---|---|---|---|
| Example 1-1 | Before heat treatment | 0.292 | 0.582 | 110 | X |
| | After heat treatment | 0.292 | 0.582 | 108 | X |
| Comparative Example 1 | Before heat treatment | 0.284 | 0.590 | 109 | ○ |
| | After heat treatment | 0.306 | 0.496 | 8 | X |

Table 3 shows that after the thermal treatment at 600°C, the phosphor according to Example 1-1 maintained its color coordinates and luminance almost without intactness, while the phosphor of the Comparative Example 1 showed changed color coordinates and remarkably deteriorated luminance.

Therefore, it can be seen that the phosphor prepared according to Example 1-1 is stable against heat.

While the present invention has been described in connection with certain exemplary embodiments thereof, it is to be understood that the invention is not limited to the disclosed embodiments, but, on the contrary, is intended to cover various modifications and equivalent arrangements included within the scope of the appended claims.

## Claims

1. A green phosphor comprising strontium, aluminium, europium and at least one element M selected from the group consisting of phosphorus, arsenic, antimony and bismuth.

2. A green phosphor as claimed in claim 1, comprising a compound of the formula (I)
Sr₍₁₋ₓ₎Al_{(1-y)}M_{y}O:Euₓ (I)
wherein 0.01≤x≤0.3, and 0.01≤y≤0.2.

3. A green phosphor as claimed in claim 2, wherein 0.05≤y≤0.1.

4. A green phosphor as claimed in claims 1, 2 or 3, wherein the phosphor has CIE colour co-ordinates of x: 0.280-0.299 and y: 0.580-0.599.

5. A green phosphor as claimed in any one of the preceding claims, wherein the at least one element M selected from the group consisting of phosphorus, arsenic, antimony and bismuth is present in higher concentration at the surface of the phosphor.

6. A green phosphor as claimed in claim 5, wherein the at least one element M selected from the group consisting of phosphorus, arsenic, antimony and bismuth is a dopant of the green phosphor.

7. A green phosphor as claimed in any one of claims 1 to 4, wherein the at least one element M selected from the group consisting of P, As, Sb and Bi is distributed throughout the green phosphor.

8. A green phosphor as claimed in any one of claims 1 to 6, wherein the at least one element selected from the group consisting of P, As, Sb and Bi is partially distributed through the green phosphor.

9. A green phosphor as claimed in any one of the preceding claims having a decay time of less than about 1ms.

10. A plasma display panel comprising a green phosphor as claimed in any one of the preceding claims.

11. A method for preparing a green phosphor comprising: (a) mixing a strontium compound, an aluminium compound, a europium compound and at least one compound of an element M selected from the group consisting of phosphorus, arsenic, antimony and bismuth; and (b) heating the mixture so obtained to form a green phosphor.

12. A method as claimed in claim 11, wherein the green phosphor comprises a compound of the formula (I)
Sr₍₁₋ₓ₎Al_{(1-y)}M_{y}O:Euₓ (I)
wherein 0.01≤x≤0.3, and 0.01≤y≤0.2

13. A method as claimed in claim 11 or 12, wherein the at least one compound of the element M is selected from the group consisting of P₂O₅, As₂O₅, Sb₂O₅ and Bi₂O₃.

14. A method as claimed in claims 11, 12 or 13, wherein the strontium compound, the aluminium compound, the at least one compound of the one element M selected from the group consisting of P, As, Sb and Bi, and the europium compound, are mixed in the presence of a flux.

15. A method as claimed in any one of claims 11 to 14, wherein said mixture is baked at 1400°C for 2 hours and 30 minutes.

## Amended claims

### Amended claims in accordance with Rule 137(2) EPC.

**1.** A green phosphor comprising a compound of the formula (I)
Sr₍₁₋ₓ₎Al_{(1-y)}M_{y}O:Euₓ (I)
wherein 0.01≤x≤0.3, and 0.01≤y≤0.2, wherein M is at least one element selected from the group consisting of phosphorus, arsenic, antimony and bismuth.

**2.** A green phosphor as claimed in claim 1, wherein 0.05≤y≤0.1.

**3.** A green phosphor as claimed in claim 1 or claim 2, wherein the phosphor has CIE colour co-ordinates of x: 0.280-0.299 and y: 0.580-0.599.

**4.** A green phosphor as claimed in any one of the preceding claims, wherein the at least one element M selected from the group consisting of phosphorus, arsenic, antimony and bismuth is present in higher concentration at the surface of the phosphor.

**5.** A green phosphor as claimed in claim 4, wherein the at least one element M selected from the group consisting of phosphorus, arsenic, antimony and bismuth is a dopant of the green phosphor.

**6.** A green phosphor as claimed in any one of claims 1 to 3, wherein the at least one element M selected from the group consisting of P, As, Sb and Bi is distributed throughout the green phosphor.

**7.** A green phosphor as claimed in any one of claims 1 to 5, wherein the at least one element selected from the group consisting of P, As, Sb and Bi is partially distributed through the green phosphor.

**8.** A plasma display panel comprising a green phosphor as claimed in any one of the preceding claims.

**9.** A method of preparing a green phosphor according to any of claims 1 to 7 comprising: (a) mixing a strontium compound, an aluminium compound, a europium compound and at least one compound of an element M selected from the group consisting of phosphorus, arsenic, antimony and bismuth; and (b) heating the mixture so obtained to form a green phosphor.

**10.** A method as claimed in claim 9, wherein the at least one compound of the element M is selected from the group consisting of P₂O₅, As₂O₅, Sb₂O₅ and Bi₂O₃.

**11.** A method as claimed in claim 9 or claim 10, wherein the strontium compound, the aluminium compound, the at least one compound of the one element M selected from the group consisting of P, As, Sb and Bi, and the europium compound, are mixed in the presence of a flux.

**12.** A method as claimed in any one of claims 9 to 11, wherein said mixture is baked at 1400°C for 2 hours and 30 minutes.
